(19) Europäisches Patentamt
European Patent Office
Office européen des brevets

(11) Veröffentlichungsnummer: **0 069 318**
**B1**

(12) # EUROPÄISCHE PATENTSCHRIFT

(45) Veröffentlichungstag der Patentschrift: **16.07.86**

(51) Int. Cl.⁴: **C 08 F 230/02**, B 41 N 1/08

(21) Anmeldenummer: **82105716.3**

(22) Anmeldetag: **28.06.82**

(54) **Polyvinylmethylphosphinsäure, Verfahren zu ihrer Herstellung und ihre Verwendung.**

(30) Priorität: **06.07.81 DE 3126627**

(43) Veröffentlichungstag der Anmeldung: **12.01.83 Patentblatt 83/2**

(45) Bekanntmachung des Hinweises auf die Patenterteilung: **16.07.86 Patentblatt 86/29**

(84) Benannte Vertragsstaaten: **BE CH DE FR GB IT LI NL**

(56) Entgegenhaltungen:
**DE - A - 2 344 332**
**FR - A - 2 367 770**
**US - A - 3 519 607**
**US - A - 4 153 461**

(73) Patentinhaber: **HOECHST AKTIENGESELLSCHAFT, Postfach 80 03 20, D-6230 Frankfurt am Main 80 (DE)**

(72) Erfinder: **Mohr, Dieter, Dr., Breitenweg 36, D-6725 Römerberg 2 (DE)**
Erfinder: **Herwig, Walter, Dr., Hasenpfad 7, D-6232 Bad Soden 2 (DE)**
Erfinder: **Frass, Werner, Dr., Erbsenacker 37, D-6200 Wiesbaden (DE)**
Erfinder: **Usbeck, Gerhard, Dr., Im Nachtschatten 10, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 069 318 B1

ACTORUM AG

**Beschreibung**

Die Erfindung betrifft ein neues Polymeres, Polyvinylmethylphosphinsäure, ein Verfahren zu seiner Herstellung und seine Verwendung bei der Herstellung von Offsetdruckplatten.

Organische Polymere, welche mit phosphorhaltigen Gruppen substituiert sind, und Verfahren zu deren Herstellung sind bereits bekannt. So ist in der DE-C-1 032 537 (= GB-A-865 046) die Herstellung flüssiger bis fester Polymerisate aus Vinylphosphonsäuredichlorid beschrieben. Die DE-C-1 106 963 befasst sich mit der Polymerisation von Vinylphosphonsäure zu Polyvinylphosphonsäure, die als sehr zähflüssiges bis hartes, klares und fast farbloses Produkt erhalten wird. Sie ist in Wasser, in Alkoholen und in mehrwertigen Alkoholen, wie Glykolen, Glykolethern, Polyglykolen, Glycerin, sowie in anderen Lösemitteln gut zu mehr oder weniger viskosen Lösungen löslich. Polyvinylphosphonsäure besitzt ferner ausgeprägte filmbildende Eigenschaften.

Solche Polymerisate aus Vinylphosphonsäure haben grosse Bedeutung als Zwischenprodukte für Kunststoffe aber auch bei der Herstellung von Flammschutzmitteln, Textilhilfsmitteln sowie Netzmittel und Emulgatoren. Ferner werden sie verwendet bei der Herstellung von Überzügen auf Metalloberflächen zum Zwecke des Korrosionsschutzes (s. DE-C-1 187 100). Des weiteren hat Polyvinylphosphonsäure eine grosse Bedeutung erlangt bei der Herstellung von Flachdruckplatten (Offsetdruckplatten).

Solche Platten bestehen aus einem Schichtträger, auf dem eine strahlungsempfindliche Reproduktionsschicht aufgebracht ist, mit deren Hilfe von einer Vorlage ein Bild auf photomechanischem Weg erzeugt wird. Nach Herstellung der Druckform trägt der Schichtträger die beim späteren Drucken farbführenden Bildstellen und bildet zugleich an den bildfreien Stellen den wasserführenden Bildhintergrund (Nichtbildstellen).

Man verlangt daher von einem Schichtträger, der für lichtempfindliches Material zum Herstellen einer Druckplatte geeignet sein soll, einerseits, dass die aus der Kopierschicht des Materials entwickelten druckenden Bildstellen auf ihm sehr fest haften, und andererseits, dass er einen hydrophilen Bilduntergrund darstellt und seine abstossende Wirkung gegenüber oleophilen Druckfarben unter den vielfältigen Anforderungen des Druckprozesses nichts an Wirksamkeit einbüsst. Der Schichtträger muss deshalb auch immer eine im gewissen Grade poröse Oberflächenstruktur aufweisen, damit seine Oberfläche genügend Wasser zurückhalten kann, um gegenüber der beim Drukken verwendeten Druckfarbe in ausreichendem Masse abstossend zu wirken.

Als Basismaterial für solche Schichtträger können Aluminium-, Stahl-, Kupfer-, Messing oder Zinkfolien verwendet werden. Diese Rohmaterialien werden durch geeignete Operationen wie Körnung, Mattverchromung, oberflächliche Oxidation und/oder Aufbringen einer Zwischenschicht in Schichtträger für Offsetdruckplatten übergeführt.

Aluminium, das heute wohl am häufigsten verwendete Basismaterial für Offsetdruckplatten, wird nach bekannten Methoden durch Trockenbürstung, Nassbürstung, Sandstrahlen, chemische oder elektrochemische Behandlung oberflächlich aufgeraut. Zur Steigerung der Abriebfestigkeit kann das aufgerauhte Substrat zusätzlich einem Anodisierungsschritt zum Aufbau einer dünnen Oxidschicht unterworfen werden.

Nach dem Stand der Technik ist es üblich, solche anodisierten Trägermaterialien zur Verbesserung der Schichthaftung, zur Steigerung der Hydrophilie bzw. zur Erleichterung der Entwickelbarkeit der lichtempfindlichen Kopierschichten einem weiteren Behandlungsschritt zu unterziehen. In der Patentliteratur sind unter anderem Methoden wie die Silikatisierung (DE-A-2 532 769 = US-A-3 902 976), die Behandlung mit komplexen Fluoriden (DE-B-1 300 415 = US-A-3 440 050) oder mit Polyvinylphosphonsäure (DE-C-1 134 093 = US-A-3 276 868, DE-C-1 621 478 = US-A-153 461) beschrieben.

Die oben beschriebenen Methoden sind jedoch mit mehr oder weniger grossen Nachteilen behaftet, so dass die so hergestellten Trägermaterialien oft nicht mehr den heutigen Erfordernissen des Offsetdrucks genügen. So muss nach der Behandlung mit Alkalisilikaten, die zu guter Entwikkelbarkeit und Hydrophilie führt, eine gewisse Verschlechterung der Lagerfähigkeit von darauf aufgebrachten lichtempfindlichen Schichten hingenommen werden.

Die Verwendung von Polyvinylphosphonsäure zur Trägernachbehandlung führt zwar zu guten kopier- und drucktechnischen Eigenschaften der Druckplatten, die Abscheidung der Polyvinylphosphonsäure auf dem Trägermaterial kann jedoch zu produktionstechnischen Schwierigkeiten führen. Verursacht werden können diese Schwierigkeiten durch $Al^{3+}$-Kationen, welche bei vorangegangenen Behandlungsstufen, hauptsächlich beim Anodisierungsschritt in einem $H_2SO_4$ und $Al_2(SO_4)_3$ enthaltenden Elektrolyten, auf die Oberfläche gelangen können und auch durch gründliches Spülen nur schwer und unvollständig zu entfernen sind. Die Polyvinylphosphonsäure reagiert mit diesen $Al^{3+}$-Ionen zu einem extrem schwerlöslichen Niederschlag. Dieser Niederschlag überzieht den Träger in Form einer weissen Staubschicht, die auch durch gründliches Abspülen nicht entfernt werden kann. Die Staubkörnchen können entweder schon beim Beschichten mit der lichtempfindlichen Schicht zu Benetzungsstörungen oder später beim Entwickeln oder Drukken zu Schichtausbrüchen führen. Derartige Störungen können nur durch einen erheblichen produktionstechnischen Aufwand unterdrückt werden.

Trägermaterialien, welche mit Polyvinylphosphonsäure behandelt wurden, neigen bei Lagerung im unbeschichteten Zustand zu Alterungserscheinungen. Diese Alterungserscheinungen manifestieren sich in abnehmender Hydrophilie (Verringerung der farbabstossenden Wirkung) sowie in der verringerten Aufentwickelbarkeit von negativ arbeitenden lichtempfindlichen Schichten, die erst längere Zeit nach der Trägerherstellung beschichtet wurden.

Ein weiteres Anwendungsgebiet von Polyvinylphosphonsäure ist der Zusatz zu Feucht- und Reinigungsmitteln für das Offsetdruckverfahren, beschrieben in DE-C-1 121 632 (= US-C-3 108 535). Solche Feuchtmittel (Feuchtwasser) müssen während des Druckvorgangs ständig an die Druckplatten herantreten, damit die nicht drukkenden Teile der Platte vor Farbannahme und unerwünschter Hydrophobierung geschützt sind.

Aufgabe der Erfindung war es, ein neues wasserlösliches Polymeres zu erstellen, welches insbesondere eine Behandlung von Trägermaterialien für Offsetdruckplatten so ermöglicht, dass die vorgenannten Nachteile bekannter Behandlungsmittel vermieden oder eingeschränkt werden.

Gegenstand der Erfindung ist Polyvinylmethylphosphinsäure.

Diese wird gewonnen durch Polymerisation von Vinylmethylphosphinsäure, welche nach den in den DE-A-2 344 332 und DE-A-2 646 582 beschriebenen Verfahren hergestellt werden kann.

Die Polymerisation von Vinylmethylphosphinsäure wird zweckmässigerweise durch Erwärmen und/oder unter UV-Bestrahlung in Gegenwart von radikalbildungsfähigen Katalysatoren durchgeführt. Das Verfahren kann bei Temperaturen zwischen −10 und +350 °C ausgeführt werden, wobei aber gegebenenfalls, z.B. im Vakuum oder in inerter Gasatmosphäre, auch noch höhere Temperaturen oder, bei Verwendung geeigneter Startsysteme und Lösemittel, auch noch niedrigere Temperaturen angewandt werden können. Sofern man unter Verwendung radikalbildungsfähiger Katalysatoren und/oder unter UV-Bestrahlung polymerisiert, wird man jedoch vorzugsweise den Temperaturbereich zwischen +5 und +130 °C zur Durchführung der Polymerisation wählen.

In manchen Fällen, besonders bei einer vorwiegend thermischen Polymerisation der Vinylmethylphosphinsäure, ist es vorteilhaft, bei Temperaturen oberhalb von +175 °C zu arbeiten.

Als Katalysatoren sind besonders solche Verbindungen geeignet, die entweder in Vinylmethylphosphinsäure allein oder in organischen Lösemitteln oder aber auch in Wasser löslich sind, beispielsweise Peroxide, wie Benzoylperoxid, Toluylperoxid, Di-tert.-Butylperoxid, Chlorbenzoylperoxid, Methylethylketonperoxid, ferner organische Derivate des Hydroperoxides, weiter auch Wasserstoffperoxid, Kaliumpersulfat, Percarbonate, auch Azobisisobutyronitril, Sulfinsäuren, wie p-Methoxybenzolsulfinsäure, Isoamylsulfinsäure, Benzolsulfinsäure, sowie gegebenenfalls Kombinationen verschiedener solcher Katalysatoren miteinander und/oder Kombinationen mit Rongalit oder Sulfiten. Weiterhin können zusätzlich Schwermetallverbindungen in jeweils geeigneter, löslicher Form als Beschleuniger eingesetzt werden.

Die Katalysatoren werden im allgemeinen in Mengen von etwa 0,01 bis 10%, vorzugsweise 0,1 bis 6%, bezogen auf das Gewicht der monomeren Vinylmethylphosphinsäure angewendet. Die Polymerisation kann im Block oder in Lösung durchgeführt werden.

Anstelle der freien Vinylmethylphosphinsäure können auch deren Salze polymerisiert werden. Insbesondere fallen hierunter jene Salze, die sich durch Umsetzung von Vinylmethylphosphinsäure mit den Oxiden und Hydroxiden der Alkalielemente herstellen lassen.

Beim Erhitzen der Polyvinylmethylphosphinsäure in einem Kapillarröhrchen zeigt sich bei Temperaturen von 160 bis 230 °C am oberen, kalten Teil des Röhrchens Kondensatbildung. Bei 240 bis 245 °C schmilzt die Polyvinylmethylphosphinsäure zu einer klaren Schmelze. Geht die Temperatur über 280 °C hinaus, so tritt unter Dunkelfärbung Zersetzung ein.

Die relative Viskosität einer 5%igen Polyvinylmethylphosphinsäurelösung in 10%iger Kochsalzlösung bei 25 °C in einem Ubbelohde-Viskosimeter gemessen, beträgt 5,8.

Die gemessenen RSV-Werte (= reduzierte spezifische Viskosität) liegen im Bereich zwischen 3,5 und 5,0 ml/g.

Die Polyvinylmethylphosphinsäure (PVMPS) ist in Wasser leicht löslich. Im Gegensatz zur Polyvinylphosphonsäure, die nur mit einwertigen Kationen gut wasserlösliche Salze bildet, sind Umsetzungsprodukte der Polyvinylmethylphosphinsäure mit ein-, zwei- und mehrwertigen Kationen wie z.B. $Na^+$, $K^+$, $NH_4^+$, $Et_4^+$, Monodiazoniumkationen, Bisdiazoniumkationen, Polydiazoniumkationen, $Mg^{++}$, $Ca^{++}$, $Ba^{++}$, $Fe^{++}$ oder $Co^{++}$ gut wasserlöslich. Die Umsetzungsprodukte mit dreiwertigen Kationen wie z.B. $Al^{3+}$ oder $Fe^{3+}$ sind zwar weniger gut löslich als die mit ein- oder zweiwertigen Kationen, sie zeigen jedoch noch eine deutliche Löslichkeit in Wasser. Durch die deutlich bessere Löslichkeit der Aluminiumverbindungen der Polyvinylmethylphosphinsäure im Vergleich zu den entsprechenden Polyvinylphosphonsäureverbindungen tritt bei der Tauchbehandlung von Schichtträgern für Offsetdruckplatten der eingangs angeführte Niederschlag bei Verwendung von Polyvinylmethylphosphinsäure nicht auf.

Auf dem bevorzugten Anwendungsgebiet der Behandlung von Substraten zur Herstellung der Schichtträger für lithographische Druckplatten wird die Polyvinylmethylphosphinsäure vorzugsweise in wässriger Lösung in einer Konzentration von 0,1 bis 1° verwendet.

Die Behandlung mit Polyvinylmethylphosphinsäure wird zweckmässigerweise durch Tauchen des Substrates oder durch Durchführen des Substratbandes durch ein Bad dieser Lösung bewerkstelligt. Dabei sind Temperaturen von 20 bis 95 °C, vorzugsweise von 26 bis 70 °C und Verweilzeiten von 2 sec bis 10 min, vorzugsweise von 10 sec bis 3 min für den praktischen Einsatz am günstigsten. Die Steigerung der Badtemperatur begünstigt die Chemisorption der Polyvinylmethylphosphinsäure auf dem Substrat. Dadurch ist es möglich, besonders bei der Bandbehandlung, die Verweilzeiten erheblich zu reduzieren. An die Tauchbehandlung schliesst sich dann ein Spülschritt mit Wasser an. Das derart behandelte Substrat wird anschliessend bei 110 bis 130 °C getrocknet.

Der entscheidende Vorteil, den dieses neue Polymere gegenüber der Polyvinylphosphonsäure bietet, ist die erheblich erleichterte Applikation auf dem vorbehandelten Substrat. Durch die sehr viel bessere Löslichkeit der Umsetzungsprodukte der Polyvinylmethylphosphinsäure mit Aluminiumionen (höheres Löslichkeitsprodukt) tritt, im Gegensatz zur Polyvinylphosphonsäure, beim Behandeln eines mit Aluminiumionen kontaminierten Aluminiumbleches nicht der oben erwähnte störende Niederschlag auf. Überraschenderweise zeigen Aluminiumträger, welche mit Polyvinylmethylphosphinsäure behandelt wurden, im Vergleich zu mit Polyvinylphosphonsäure behandelten Trägern eine deutlich erhöhte Lagerfähigkeit im unbeschichteten Zustand. Daraus eröffnen sich Möglichkeiten, derart behandelte Trägermaterialien auch für das «wipe-on-Verfahren» einzusetzen, d.h. Mehrfachverwendung eines Schichtträgers mit erneuter lichtempfindlicher Beschichtung für mehrere Druckplatten.

Zusammenfassend kann festgestellt werden, dass Trägermaterialien, welche eine dünne oberflächliche Schicht aus Polyvinylmethylphosphinsäure besitzen, bei erheblich erleichterter Herstellbarkeit durch gute Hydrophilie, gute Haftvermittlung zu den Kopierschichten sowie gutes kopier- und drucktechnisches Verhalten ausgezeichnet sind.

Beispiele

Die in den Beispielen vorkommenden Massangaben stimmen in den Dimensionen mit dem internationalen SI-System überein. Die Prozentangaben sind, sofern nicht eigens anders erwähnt, in Gewichtsprozent angegeben. Die Angaben Gew.-Teile und Vol.-Teile verhalten sich wie g zu $cm^3$. Die Viskositätsangaben «relative Viskosität» und «RSV» (= reduzierte spezifische Viskosität) sind die in der Fachliteratur üblichen Daten zur Kennzeichnung polymerer Verbindungen; s. hierzu insbesondere G. Schulz, Die Kunststoffe, Carl Hanser Verlag – München, 1959, Seite 143.

Beispiel 1

In einem Vierhalskolben, ausgerüstet mit Flügelrührer, Tropftrichter, Rückflusskühler und Thermometer, wurden unter Argon als Schutzgas 150 ml von wasserfreiem Essigsäureethylester vorgelegt. Davon getrennt wurden 4,8 g Azobisisobutyronitril in 100 ml wasserfreiem Essigsäureethylester gelöst. Nach Filtration von einigen ungelösten Partikelchen setzte man dieser Lösung 160 g Methylvinylphosphinsäure zu, verdünnte mit weiteren 50 ml Essigsäureethylester und füllte die Lösung in den Tropftrichter. Dem im Rundkolben gerührten, auf Siedetemperatur erhitzten Ester wurde im Verlauf von 3 h der Inhalt des Tropftrichters gleichmässig zugegeben. Nach ca. 20 min begann das Polymerisat als feines, weisses Pulver auszufallen. Nach beendetem Zutropfen wurde das Reaktionsgemisch unter gleichmässigem Rühren noch eine Stunde am Rückfluss erhitzt. Das feinkristalline Pulver wurde bei Zimmertemperatur über eine Glasfritte abgesaugt, 3 mal mit einigen ml eiskaltem Essigsäureethylester gewaschen und im Vakuum bei Zimmertemperatur scharf getrocknet.

Die Ausbeute von 141,5 g entsprach 88,4% der Theorie. Durch Einengen der Mutterlauge auf die Hälfte ihres Volumens erhielt man weitere 4,6 g der polymeren Säure, so dass die Totalausbeute 91,3% der Theorie betrug.

Die Endlauge enthielt nicht näher charakterisierte oligomere Öle.

Zur Titration der Säuregruppen wurden in parallelen Ansätzen analysenreine Proben von Methylvinylphosphinsäure (MVPS) und Polyvinylmethylphosphinsäure (PVMPS) in Wasser gelöst und mit überschüssiger 0,1 n NaOH versetzt. Mit 0,1 n HCl wurden diese Lösungen dann gegen Phenolphthalein zurücktitriert. Bezogen auf den theoretisch zu erwartenden OH-Gruppengehalt wurden gefunden:

| | OH-Gruppen, prozentual durch Titration erfasst | |
|---|---|---|
| MVPS | 98,04 %; | 98,46 % |
| PVMPS | 85,42 %; | 84,65 % |

Die Ergebnisse kleinerer Ansätze (1a, 1b, 1c) sind tabellarisch wiedergegeben:

| | Phosphinsäure (g) | Essigester (ml) | AIBN (g) | AIBN bez. auf Monomer (%) | Reaktionszeit (h) | Ausbeute Polymer (%) | RSV |
|---|---|---|---|---|---|---|---|
| 1 a | 2 | 5 | 0,05 | 2,5 | 3,5 | 68,5 | |
| 1 b | 20 | 50 | 0,3 | 1,5 | 5 | 54,2 | 4,7 |
| 1 c | 20 | 50 | 0,6 | 3,0 | 5 | 81,1 | 4,3 |

Beispiel 2

Ein walzblankes Aluminiumband der Dicke 0,3 mm wurde mit einer alkalischen Beizlösung (einer wässrigen Lösung aus 20 g NaOH pro 1 Lösung) bei erhöhter Temperatur von etwa 50° bis 70 °C entfettet. Die elektrochemische Aufrauhung der Aluminiumoberfläche erfolgte in einer nach der Lehre der DE-AS-2 234 434 erstellten Apparatur mit Wechselstrom und in einem $HNO_3$ enthaltenden Elektrolyten. Dabei wurde eine Oberflächenrauhigkeit mit einem $R_z$-Wert von 6 µm erhalten. Die anschliessende anodische Oxidation wurde entsprechend dem in der DE-OS-2 811 396 beschriebenen Verfahren in einem schwefelsäurehaltigen Elektrolyten durchgeführt. Das Oxidationsgewicht betrug 3,0 g/m².

Das derart vorbereitete Aluminiumband wurde anschliessend durch ein auf 60 °C erwärmtes Bad, welches aus einer 0,5%igen Lösung der Polyvinylmethylphosphinsäure bestand, geführt. Die Verweilzeit im Bad betrug 20 sec. Danach wurde in einem Spülschritt die überschüssige Lösung mit Wasser entfernt und das Band mit Heissluft bei Temperaturen zwischen 100° und 130 °C getrocknet.

Zur Herstellung von lithographischen Druckplatten wurde dieser Träger mit der folgenden Lösung beschichtet und getrocknet:

| | |
|---|---|
| 0,7 Gew.-Teile | des Polykondensationsproduktes aus 1 Mol 3-Methoxy-diphenylamin-4-diazoniumsulfat und 1 Mol 4,4'-Bis-methoxymethyl-diphenylether, ausgefällt als Mesitylensulfonat. |
| 3,4 Gew.-Teile | 85%iger Phosphorsäure, |
| 3,0 Gew.-Teile | eines modifizierten Epoxidharzes, erhalten durch Umsetzen von 50 Gew.-Teilen eines Epoxidharzes mit einem Molgewicht unterhalb 1000 und 12,8 Gew.-Teilen Benzoesäure in Ethylenglykolmonomethylether in Gegenwart von Benzyltrimethylammoniumhydroxid, |
| 0,44 Gew.-Teile | feingemahlenes Heliogenblau G (C. I. 74 100), |
| 62,0 Gew.-Teile | Ethylenglykolmonomethylether, |
| 30,6 Gew.-Teile | Tetrahydrofuran und |
| 8,0 Gew.-Teile | Ethylenglykolmethyletheracetat. |

Nach dem Belichten durch eine Negativmaske wurde mit einer Lösung von

| | |
|---|---|
| 2,8 Gew.-Teile | $Na_2SO_4 \cdot 10\ H_2O$, |
| 2,8 Gew.-Teile | $MgSO_4 \cdot 7\ H_2O$, |
| 0,9 Gew.-Teile | Orthophosphorsäure (85%), |
| 0,08 Gew.-Teile | phosphoriger Säure, |
| 1,6 Gew.-Teile | nichtionischem Netzmittel, |
| 10,0 Gew.-Teile | Benzylalkohol, |
| 20,0 Gew.-Teile | n-Propanol, |
| 60,0 Gew.-Teile | Wasser |

entwickelt.

Die so hergestellte Druckplatte war zügig und schleierfrei zu entwickeln. Die Nichtbildbereiche zeichneten sich durch eine sehr gute farbabstossende Wirkung aus. Die Randwinkelmessung gegenüber einem Wassertropfen ergab beim unbeschichteten Material einen Wert von 43°. Die Druckauflage der so hergestellten Druckform betrug 200 000 Drucke.

Beispiel 3

Ein entsprechend dem Beispiel 2 behandeltes Aluminiumband wurde mit folgender Lösung beschichtet:

| | |
|---|---|
| 6,6 Gew.-Teile | Kresol-Formaldehyd-Novolak mit dem Erweichungsbereich 105° bis 120 °C nach DIN 53 181, |
| 1,1 Gew.-Teile | des 4-(2-Phenyl-prop-2-yl)-phenylesters der Naphthochinon-(1,2)-diazid-(2)-sulfonsäure-(4), |
| 0,6 Gew.-Teile | 2,2'-Bis-(naphthochinon-(1,2)-diazid-(2)-sulfonyloxy-(5)-dinaphthyl-1,1')-methan, |
| 0,24 Gew.-Teile | Naphthochinon-(1,2)-diazid-(2)-sulfonsäurechlorid-(4), |
| 0,08 Gew.-Teile | Kristallviolett, |
| 91,36 Gew.-Teile | Lösemittelgemisch aus 4 Vol.-Teilen Ethylenglykolmonomethylether, 5 Vol.-Teilen Tetrahydrofuran und 1 Vol.-Teil Butylacetat. |

Das beschichtete Band wurde im Trockenkanal bei Temperaturen bis 120 °C getrocknet. Die so hergestellten Druckplatten wurden unter einer Postivvorlage belichtet und mit einem Entwickler der folgenden Zusammensetzung entwickelt:

| | |
|---|---|
| 5,3 Gew.-Teile | Natriummetasilikat $\cdot$ 9 $H_2O$, |
| 3,4 Gew.-Teile | Natriumdihydrogenphosphat (wasserfrei), |
| 91,0 Gew.-Teile | Wasser. |

Die erhaltenen Druckformen waren kopier- und drucktechnisch fehlerfrei.

Die Nichtbildbereiche besassen eine gute farbabstossende Wirkung, was sich im schnellen Freilaufen der Druckform in der Druckmaschine manifestierte. Die Druckauflage lag über 100 000.

Beispiel 4

Ein gemäss Beispiel 2 behandeltes Aluminiumblech wurde mit folgender Lösung beschichtet:

| | |
|---|---|
| 10 Gew.-Teile | 2,5-Bis-(4'diethylaminophenyl)-1,3,4-oxdiazol, |
| 10 Gew.-Teile | eines Mischpolymerisats aus Styrol und Maleinsäureanhydrid mit dem mittleren Molekulargewicht 20 000 und der Säurezahl 180, |
| 0,02 Gew.-Teile | Rhodamin FB (C. I. 45 170) in |
| 300 Gew.-Teile | eines Gemisches aus 3 Vol.-Teilen Tetrahydrofuran, 2 Vol.-Teilen Ethylenglykolmonomethylether und 1 Vol.-Teil Butylacetat. |

Die Schicht wurde im Dunkeln mittels einer Corona auf etwa 400 V negativ aufgeladen. Die aufgeladene Platte wurde in einer Reprokamera belichtet und anschliessend mit einem elektrophotographischen Suspensionsentwickler entwickelt, der durch Dispergieren von 3,0 g Magnesiumsulfat in einer Lösung von 7,5 g Pentaerythritharzester in 1200 ml eines Isoparaffingemisches mit einem Siedebereich von 185° bis 210 °C erhalten

worden war. Nach Entfernen der überschüssigen Entwicklerflüssigkeit wurde die Platte 60 sec in eine Lösung aus

35 Gew.-Teile Natriummetasilikat · $H_2O$,
140 Vol.-Teile Glycerin,
550 Vol.-Teile Ethylenglykol und
140 Vol.-Teile Ethanol

getaucht. Die Platte wurde dann mit einem kräftigen Wasserstrahl abgespült, wobei die nicht mit Toner bedeckten Stellen der Photoleiterschicht entfernt wurden. Die Platte war dann druckfertig.

Die so hergestellte Flachdruckform besass in den Nichtbildbereichen eine sehr gute farbabstossende Wirkung.

Vergleichsbeispiel V1

Ein gemäss Beispiel 2 elektrochemisch aufgerauhtes und anodisiertes Aluminiumblech wurde während 30 sec bei 55 °C in eine 0,5%ige wässrige Lösung von Polyvinylphosphonsäure getaucht. Danach wurde in einem Spülschritt die überschüssige Lösung mit Wasser entfernt und das Substrat mit Heissluft bei einer Temperatur von 100° bis 130 °C getrocknet. Zur Herstellung von lithographischen Druckplatten wurde dieser Träger mit der in Beispiel 2 beschriebenen lichtempfindlichen Schicht versehen und – wie dort beschrieben – weiterverarbeitet. Die Randwinkelmessung gegenüber einem Wassertropfen ergab beim unbeschichteten Material einen Randwinkel von 47°. Bei Lagerung des Trägermaterials über einen Zeitraum von drei Monaten stieg dieser Wert auf 63° an. Demgegenüber blieb der Randwinkel bei einem mit Polyvinylmethylphosphinsäure behandelten Material während dieser Zeit mit einem Wert von 49° nahezu erhalten.

**Patentansprüche**

1. Polyvinylmethylphosphinsäure.

2. Verfahren zur Herstellung von Polyvinylmethylphosphinsäure, dadurch gekennzeichnet, dass man die monomere Vinylmethylphosphinsäure und/oder deren Salze der allgemeinen Formel

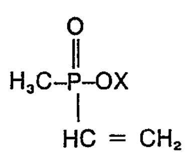

in der X
Wasserstoff oder ein Alkalimetall bedeutet,
gegebenenfalls in Anwesenheit eines inerten Verdünnungs- oder Lösemittels durch Katalyse mit polymerisationsauslösenden Radikalen, durch elektromagnetische Strahlung und/oder durch Erwärmung polymerisiert.

3. Verfahren nach Anspruch 2, dadurch gekennzeichnet, dass zur Polymerisation ein organisches Lösemittel verwendet wird, welches zur Gruppe der aprotischen, polaren organischen Lösemittel gehört und wasserfrei ist.

4. Verwendung von Polyvinylmethylphosphinsäure bei der Herstellung von Offsetdruckplatten.

**Claims**

1. Polyvinylmethylphosphinic acid.

2. A process for the preparation of polyvinylmethylphosphinic acid, which comprises polymerizing monomeric vinylmethylphosphinic acid, and/or salts thereof, of the general formula

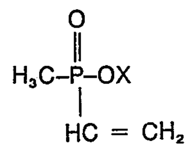 ,

in which X denotes hydrogen or an alkali metal, if appropriate in the presence of an inert diluent or solvent, by the catalytic action of free radicals which initiate polymerization, by electromagnetic radiation and/or by heating.

3. The process as claimed in claim 2, wherein an organic solvent which belongs to the group of aprotic, polar organic solvents and which is anhydrous is used for the polymerization.

4. The use of polyvinylmethylphosphinic acid in the production of offset printing plates.

**Revendications**

1. Acide polyvinylméthylphosphinique.

2. Procédé de préparation d'acide polyvinylméthylphosphique caractérisé en ce qu'on polymérise l'acide vinylméthylphosphinique monomère et/ou ses sels de formule générale

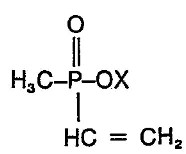

dans laquelle X représente l'hydrogène ou un métal alcalin éventuellement en présence d'un diluant ou d'un solvant inerte, par catalyse avec des radicaux initiant la polymérisation, par irradiation électromagnétique et/ou par chauffage.

3. Procédé selon la revendication 2, caractérisé en ce que, pour la polymérisation, on utilise un solvant organique choisi parmi les solvants organiques, polaires, aprotiques et qui est anhydre.

4. Utilisation de l'acide polyvinylméthylphosphinique pour la préparation de plaques pour impression offset.